# EUROPÄISCHE PATENTANMELDUNG

(11) **EP 4 772 365 A1**
(43) Veröffentlichungstag der Anmeldung: **08.07.2026**
(21) Anmeldenummer: 25217774.6
(22) Anmeldetag: 21.11.2025
(51) Int. Cl.: B60J 10/21, B60J 10/76, B60J 10/79

(54) **FENSTERFÜHRUNG UND KRAFTFAHRZEUGFENSTER**

(30) Priorität: 03.01.2025 DE 102025100106
(71) Anmelder: CQLT SaarGummi Technologies S.à.r.l., 5544 Remich (LU)
(72) Erfinder: Grüter, Achim, 66780 Rehlingen-Siersburg (DE); Laux, Timo, 66809 Nalbach (DE); Thiel, Daniel, 66701 Beckingen-Oppen (DE)
(74) Vertreter: Patentanwälte Bernhardt / Wolff Partnerschaft mbB

(57) **Zusammenfassung**

Die Erfindung betrifft eine Fensterführung (1) zur Führung einer versenkbaren Fensterscheibe eines Kraftfahrzeugs umfassend ein erstes Führungsprofil (2) und ein zweites Führungsprofil (3), welche in einem Eckbereich (4) verbunden sind, wobei das erste Führungsprofil (2) und das zweite Führungsprofil (3) jeweils ein Randdichtungselement (8a; 8b) aufweisen, welche zur Anlage an einem seitlichen Rand einer Fensterscheibe ausgebildet sind. Um eine besonders gute Abdichtung der versenkbaren Fensterscheibe und zudem eine optisch ansprechende Erscheinungsform zu ermöglichen, gehen die Randdichtungselemente (8a; 8b) in dem Eckbereich (4) ineinander über.

## Beschreibung

Die Erfindung betrifft eine Fensterführung zur Führung einer versenkbaren Fensterscheibe eines Kraftfahrzeugs nach dem Oberbegriff des Anspruchs 1 sowie ein Kraftfahrzeugfenster.

Durch Benutzung sind Fensterführungen zur Führung einer versenkbaren Fensterscheibe eines Kraftfahrzeugs bekannt, welche ein erstes Führungsprofil und ein zweites Führungsprofil umfassen, wobei die Führungsprofile in einem Eckbereich stoffschlüssig verbunden sind. Das erste Führungsprofil und das zweite Führungsprofil weisen jeweils ein Randdichtungselement auf, welche zur Anlage an einem seitlichen Rand einer Fensterscheibe ausgebildet sind, um die Fensterscheibe in der Schließstellung gegenüber der Fensterführung abzudichten.

Aufgabe der Erfindung ist es, eine Fensterführung zu schaffen, welche eine besonders gute Abdichtung einer versenkbaren Fensterscheibe und zudem eine optisch ansprechende Erscheinungsform ermöglicht.

Diese Aufgabe wird dadurch gelöst, dass die Randdichtungselemente des ersten Führungsprofils und des zweiten Führungsprofils in dem Eckbereich ineinander übergehen. Hierdurch wird erreicht, dass die Randdichtungselemente lückenlos an einer Fensterscheibe in der oberen Schließposition anliegen, wodurch eine besonders gute Abdichtung erreicht wird.

Als Randdichtungselement ist in diesem Zusammenhang ein Dichtungselement zu verstehen, welches ausgebildet ist, dichtend an dem äußeren Rand einer Fensterscheibe, also dem Bereich, welcher die Innenseite und die Außenseite der Fensterscheibe verbindet, anzuliegen. Die Randdichtungselemente können dabei beispielsweise als Dichtlippen und/oder als Hohlkammern ausgebildet sein.

In einer vorteilhaften Ausführungsform können an dem ersten Führungsprofil und dem zweiten Führungsprofil jeweils mindestens eine innere Dichtlippe vorgesehen sein, welche zur Anlage an einer Innenseite einer Fensterscheibe ausgebildet sind, wobei die inneren Dichtlippen in dem Eckbereich ineinander übergehen. Besonders vorteilhaft können mindestens zwei derartige innere Dichtlippen an jedem Führungsprofil vorgesehen sein, welche in dem Eckbereich ineinander übergehen. Durch diese inneren Dichtlippen wird eine weitere Dichtungsebene gebildet, welche die Abdichtung gegenüber der Fensterscheibe zusätzlich verbessert.

In einer besonders vorteilhaften Ausführungsform kann nur an dem ersten Führungsprofil eine äußere Dichtlippe vorgesehen sein, welche zur Anlage an einer Außenseite einer versenkbaren Fensterscheibe ausgebildet ist, wobei sich die äußere Dichtlippe vorzugsweise geradlinig über den Eckbereich hinaus erstreckt. Die äußere Dichtlippe kann dabei vorteilhaft keine Verbindung mit den Randdichtungselementen aufweisen, so dass die äußere Dichtlippe unabhängig von den Randdichtungselementen wirkt.

Die Randdichtungselemente können als Dichtlippen ausgebildet sein, welche im Querschnitt der Führungsprofile in gleicher oder entgegengesetzter Richtung orientiert sind. So können die Dichtlippen der Randdichtungselemente in der Einbauposition an einem Kraftfahrzeug beide in Richtung einer Innenseite oder einer Außenseite eines Kraftfahrzeugs zeigen oder in unterschiedliche Richtung orientiert sein, beispielsweise kann die Dichtlippe des Randdichtungselements des ersten Führungsprofils, bei welchem es sich vorzugsweise um eine gekrümmte Dachrahmendichtung handelt, zu einer Außenseite des Kraftfahrzeugs hin orientiert sein, wohingegen die Dichtlippe des Randdichtungselements des zweiten Führungsprofils, bei welchem es sich vorzugsweise um eine vertikale Fensterrahmendichtung bzw. B-Säulen-Dichtung handelt, in Richtung der Innenseite eines Kraftfahrzeugs orientiert sein kann.

Besonders vorteilhaft bildet das Randdichtungselement des zweiten Führungsprofils die äußerste Dichtung des zweiten Führungsprofils. Es ist an dem zweiten Führungsprofil in dieser Ausgestaltung also keine äußere Dichtlippe oder dergleichen vorgesehen. Hierdurch wird ein bündiger Übergang zwischen der Fensterscheibe und dem zweiten Führungsprofil ermöglicht.

Der Eckbereich kann vorteilhaft durch ein Formteil gebildet sein, welches an die vorzugsweise durch Extrusion hergestellten Führungsprofile angeformt ist, beispielsweise mittels Spritzguss.

Des Weiteren wird ein Kraftfahrzeugfenster beansprucht, welches einen Fensterrahmen, eine an dem Fensterrahmen befestigte Fensterführung sowie eine Fensterscheibe umfasst, wobei erfindungsgemäß die Fensterführung wie zuvor beschrieben ausgebildet ist. Durch die erfindungsgemäße Ausgestaltung wird ermöglicht, dass in der oberen Schließstellung der Fensterscheibe die Randdichtungselemente an einem Rand der Fensterscheibe anliegen, insbesondere lückenlos auch in dem Eckbereich. Hierdurch wird eine besonders zuverlässige Abdichtung erreicht.

Das erste Führungsprofil der Fensterführung kann als Dachrahmenprofil ausgebildet sein und das zweite Führungsprofil der Fensterführung kann an einem vertikalen Fensterrahmenabschnitt angeordnet sein, beispielsweise als B-Säulen-Dichtung.

In einer besonders bevorzugten Ausführungsform kann die Fensterscheibe in der oberen Schließstellung vorgespannt an dem Randdichtungselement des ersten Führungsprofils anliegen, so dass das Randdichtungselement des zweiten Führungsprofils an die Fensterscheibe herangezogen wird, wodurch die Abdichtung zusätzlich verbessert wird.

Weitere Besonderheiten und Vorzüge der Erfindung ergeben sich aus der folgenden Beschreibung eines bevorzugten Ausführungsbeispiels anhand der Zeichnungen. Es zeigen:
- Fig. 1: eine Seitenansicht auf eine Fensterführung zur Führung einer hier nicht dargestellten versenkbaren Fensterscheibe eines Kraftfahrzeugs umfassend ein erstes oberes Führungsprofil und ein zweites seitliches Führungsprofil, welche in einem Eckbereich verbunden sind;
- Fig. 2: einen Querschnitt durch ein Kraftfahrzeugfenster umfassend einen Fensterrahmen, die an dem Fensterrahmen befestigte Fensterführung von Figur 1 sowie eine Fensterscheibe, wobei der Querschnitt im Bereich des ersten Führungsprofils der Fensterführung angeordnet ist;
- Fig. 3: einen Querschnitt durch das Kraftfahrzeugfenster von Figur 2 im Bereich des zweiten Führungsprofils der Fensterführung;
- Fig. 4: eine erste perspektivische Darstellung des Eckbereichs der Fensterführung von Figur 1 und
- Fig. 5: eine zweite perspektivische Darstellung des Eckbereichs der Fensterführung von Figur 1.

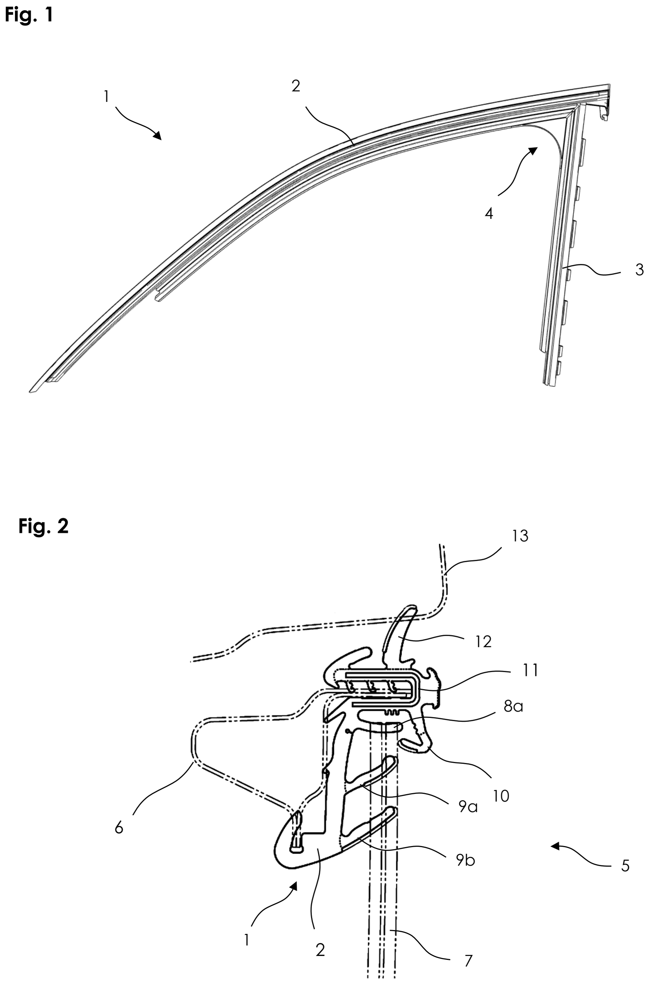

In Figur 1 ist eine Fensterführung 1 zur Führung einer hier nicht dargestellten versenkbaren Fensterscheibe eines Kraftfahrzeugs gezeigt. Die Fensterführung 1 umfasst ein erstes, oberes Führungsprofil 2 und ein zweites, seitliches Führungsprofil 3, welche in einem Eckbereich 4 stoffschlüssig verbunden sind. Bei dem ersten Führungsprofil 2 handelt es sich um ein Dachrahmenprofil, welches an dem oberen Abschnitt eines Fensterrahmens angeordnet wird. Das zweite Führungsprofil 3 ist an einem vertikalen Fensterrahmenabschnitt angeordnet und als B-Säulen-Dichtung ausgebildet.

In Figur 2 ist ein Querschnitt durch ein Kraftfahrzeugfenster 5 gezeigt, welches einen Fensterrahmen 6, die an dem Fensterrahmen 6 befestigte Fensterführung 1 sowie eine versenkbare Fensterscheibe 7 umfasst. Der gezeigte Querschnitt betrifft das erste, obere Führungsprofil 2 angrenzend zu dem Eckbereich 4. Wie aus der Darstellung zu entnehmen ist, umfasst das erste Führungsprofil 2 ein Randdichtungselement 8a, welches in Form einer Dichtlippe zur Anlage an einem seitlichen Rand der Fensterscheibe 7 ausgebildet ist. Zudem umfasst das erste Führungsprofil 2 zwei innere Dichtlippen 9a, 9b zur Anlage an einer Innenseite der Fensterscheibe 7 sowie eine äußere Dichtlippe 10 zur Anlage an einer Außenseite der Fensterscheibe 7. Um das erste Führungsprofil 2 an dem Fensterrahmen 6 zu befestigen, ist unter anderem ein metallverstärkter U-förmige Befestigungsabschnitt 11 vorgesehen, welcher auf einen Falz des Fensterrahmens 6 aufgesteckt ist. Auf der der Fensterscheibe 7 abgewandten Seite des ersten Führungsprofils 2 ist zudem eine Anlagelippe 12 vorgesehen, welche in der Schließstellung einer mit dem Fensterrahmen 6 ausgestatteten Fahrzeugtür an einer Fahrzeugkarosserie 13 dichtend anliegt.

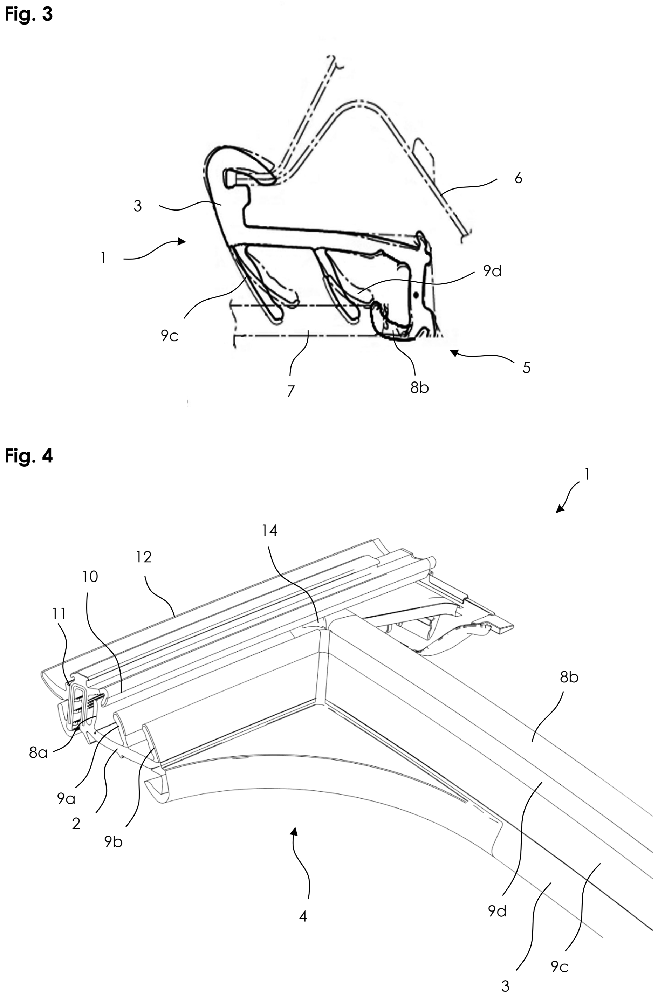

In Figur 3 ist ein Querschnitt durch das Kraftfahrzeugfenster 5 von Figur 2 im Bereich des zweiten Führungsprofils 3 der Fensterführung 1 gezeigt. Auch das zweite Führungsprofil 3 umfasst ein Randdichtungselement 8b sowie innere Dichtlippen 9c und 9d. Wie sich aus dem Vergleich mit dem in Figur 2 gezeigten ersten Führungsprofil 2 ergibt, ist an dem zweiten Führungsprofil 3 jedoch keine äußere Dichtlippe zur Anlage an einer Außenseite der Fensterscheibe 7 vorgesehen. Das Randdichtungselement 8b des zweiten Führungsprofils 3 bildet die äußerste Dichtung des zweiten Führungsprofils 3 und ist bündig zur Außenseite der Fensterscheibe 7 angeordnet.

In Figur 4 ist eine erste perspektivische Darstellung des Eckbereichs 4 der Fensterführung 1 von Figur 1 gezeigt. Wie dort zu entnehmen ist, gehen die Randdichtungselemente 8a, 8b in dem Eckbereich 4 ineinander über und sind stoffschlüssig verbunden. Zudem ist am Übergang zwischen den Randdichtungselementen 8a, 8b eine Eckenverrundung in Form eines Spannbandes 14 vorgesehen, welches gegenüber den in Längsrichtung verlaufenden und als Dichtlippen ausgebildeten Randdichtungselementen 8a, 8b am Übergang nach innen vorsteht. Ebenso gehen auch die inneren Dichtlippen 9a und 9d sowie 9b und 9c ineinander über und sind stoffschlüssig verbunden. Die äußere Dichtlippe 10 ist nicht mit den Randdichtungselementen 8a, 8b verbunden und erstreckt sich geradlinig über den Eckbereich 4 hinaus.

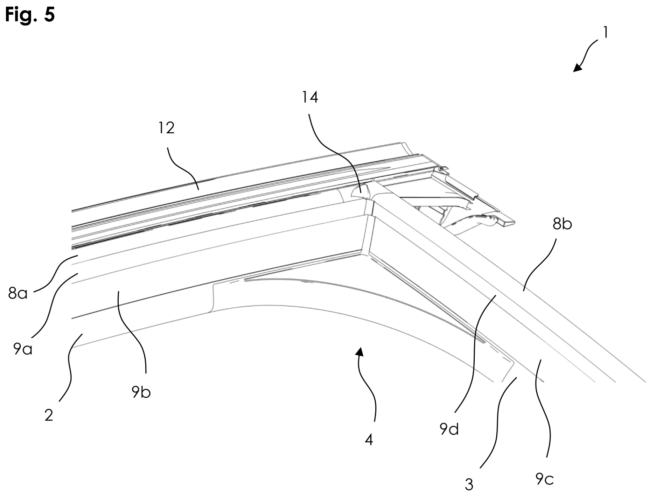

In Figur 5 ist eine zweite perspektivische Darstellung des Eckbereichs 4 der Fensterführung 1 von Figur 1 gezeigt, wobei im Unterschied zur Darstellung von Figur 4 die äußere Dichtlippe 10 sowie angrenzende weitere Teile des ersten Führungsprofils 2 weggeschnitten sind, um den Übergang mit dem Spannband 14 von dem Randdichtungselement 8a des ersten Führungsprofils 2 auf das Randdichtungselement 8b des zweiten Führungsprofils 3 zu verdeutlichen.

Der Eckbereich 4 ist durch ein Formteil gebildet, welches durch Anspritzen an die durch Extrusion hergestellten Führungsprofile 2, 3 hergestellt wird. Hierzu können die Führungsprofile 2, 3 in einer entsprechenden Form positioniert und fixiert werden und nach Schließen der Form kann der entsprechend ausgebildete Hohlraum zur Bildung des Eckbereichs 4 ausgefüllt werden. Als Material für die Fensterführung 1 wird bevorzugt ein thermoplastischer Kunststoff, EPDM oder ein thermoplastisches TPE vorgesehen.

Wenn die in den Figuren 4 und 5 nicht gezeigte Fensterscheibe 7 in der Fensterführung 1 angeordnet ist und mit dem seitlichen Rand an den Randdichtungselementen 8a, 8b anliegt, wird bei einem Verspannen der Fensterscheibe 7 gegen das obere Randdichtungselement 8a aufgrund des Spannbands 14 automatisch auch das seitliche Randdichtungselement 8b an den Rand der Fensterscheibe 7 herangezogen, wodurch die Abdichtung in der Schließstellung der Fensterscheibe 7 verbessert wird. Insbesondere ist sichergestellt, dass die Randdichtungselemente 8a, 8b lückenlos an dem Rand der Fensterscheibe auch in dem Eckbereich 4 anliegen.

Bei dem gezeigten Ausführungsbeispiel sind die als Dichtlippen ausgebildetem Randdichtungselemente 8a, 8b in entgegengesetzter Richtung orientiert. Wie aus der Figur 2 zu nennen ist, ist die Dichtlippe des Randdichtungselements 8a des oberen, ersten Führungsprofils 2 wie auch die inneren Dichtlippen 9a, 9b zu einer Außenseite des Kraftfahrzeugs orientiert, wohingegen gemäß Figur 3 die Dichtlippe des Randdichtungselements 8b entgegengesetzt zu den inneren Dichtlippen 9c, 9d in Richtung einer Innenseite des Kraftfahrzeugs orientiert ist. Im Übrigen erstrecken sich die als Dichtlippen ausgebildeten Randdichtungselemente 8a, 8b ebenso wie die inneren Dichtlippen 9a-d, die äußere Dichtlippe 10 und die Anlagelippe 12 in Längsrichtung der Führungsprofile 2 bzw. 3, wobei die Führungsprofile 2, 3 zumindest abschnittsweise in der Geometrie einen konstanten Querschnitt aufweisen. Wie aus den Darstellungen ebenfalls hervorgeht, kann insbesondere an den inneren Dichtlippen 9a-d, der äußeren Dichtlippe 10 und der Anlagelippe 12 eine Beschichtung (z.B. Lack oder Flock) oder ein extrudiertes Material vorgesehen sein, um die Reibung gegenüber der Fensterscheibe 7 zu reduzieren.

### Bezugszeichenliste:

- 1: Fensterführung
- 2: Erstes Führungsprofil
- 3: Zweites Führungsprofil
- 4: Eckbereich
- 5: Kraftfahrzeugfenster
- 6: Fensterrahmen
- 7: Fensterscheibe
- 8a, 8b: Randdichtungselemente
- 9a, 9b, 9c, 9d: Innere Dichtlippen
- 10: Äußere Dichtlippe
- 11: Befestigungsabschnitt
- 12: Anlagelippe
- 13: Fahrzeugkarosserie
- 14: Spannband

## Patentansprüche

1. Fensterführung (1) zur Führung einer versenkbaren Fensterscheibe (7) eines Kraftfahrzeugs umfassend ein erstes Führungsprofil (2) und ein zweites Führungsprofil (3), welche in einem Eckbereich (4) verbunden sind, wobei das erste Führungsprofil (2) und das zweite Führungsprofil (3) jeweils ein Randdichtungselement (8a; 8b) aufweisen, welche zur Anlage an einem seitlichen Rand einer Fensterscheibe (7) ausgebildet sind,
**dadurch gekennzeichnet,**
**dass** die Randdichtungselemente (8a; 8b) in dem Eckbereich (4) ineinander übergehen.

2. Fensterführung (1) nach Anspruch 1,
**dadurch gekennzeichnet,**
**dass** die Randdichtungselemente (8a; 8b) als Dichtlippen und/oder als Hohlkammern ausgebildet sind.

3. Fensterführung (1) nach einem der vorhergehenden Ansprüche,
**dadurch gekennzeichnet,**
**dass** an dem ersten Führungsprofil (2) und dem zweiten Führungsprofil (3) jeweils mindestens eine innere Dichtlippe (9a; 9b; 9c; 9d) vorgesehen ist, welche zur Anlage an einer Innenseite einer Fensterscheibe (7) ausgebildet sind, wobei die inneren Anlagelippen (9a; 9b; 9c; 9d) in dem Eckbereich (4) ineinander übergehen.

4. Fensterführung (1) nach einem der vorhergehenden Ansprüche,
**dadurch gekennzeichnet,**
**dass** nur an dem ersten Führungsprofil (2) eine äußere Dichtlippe (10) vorgesehen ist, welche zur Anlage an einer Außenseite einer Fensterscheibe (7) ausgebildet ist, wobei sich die äußere Dichtlippe (10) vorzugsweise über den Eckbereich (4) hinaus erstreckt.

5. Fensterführung (1) nach Anspruch 4,
**dadurch gekennzeichnet,**
**dass** die äußere Dichtlippe (10) keine Verbindung mit den Randdichtungselementen (8a; 8b) aufweist.

6. Fensterführung (1) nach einem der vorhergehenden Ansprüche,
**dadurch gekennzeichnet,**
**dass** die Randdichtungselemente (8a; 8b) als Dichtlippen ausgebildet sind, welche in gleicher oder entgegengesetzter Richtung orientiert sind.

7. Fensterführung (1) nach einem der vorhergehenden Ansprüche,
**dadurch gekennzeichnet,**
**dass** das Randdichtungselement (8b) des zweiten Führungsprofils (3) die äußerste Dichtung des zweiten Führungsprofils (3) bildet.

8. Fensterführung (1) nach einem der vorhergehenden Ansprüche,
**dadurch gekennzeichnet,**
**dass** der Eckbereich (4) durch ein Formteil gebildet ist, welches an die vorzugsweise durch Extrusion hergestellten Führungsprofile (2; 3) angeformt ist.

9. Kraftfahrzeugfenster (5) umfassend einen Fensterrahmen (6), eine an dem Fensterrahmen (6) befestigte Fensterführung (1) sowie eine Fensterscheibe (7), **dadurch gekennzeichnet,**
**dass** die Fensterführung (1) nach einem der Ansprüche 1 bis 8 ausgebildet ist.

10. Kraftfahrzeugfenster (5) nach Anspruch 9,
**dadurch gekennzeichnet,**
**dass** die Randdichtungselemente (8a; 8b) an einem Rand der Fensterscheibe (7) anliegen, vorzugsweise lückenlos auch in dem Eckbereich (4).

11. Kraftfahrzeugfenster (5) nach Anspruch 9 oder 10,
**dadurch gekennzeichnet,**
**dass** das erste Führungsprofil (2) als Dachrahmenprofil ausgebildet ist und das zweite Führungsprofil (3) an einem vertikalen Fensterrahmenabschnitt angeordnet ist.

12. Kraftfahrzeugfenster (5) nach einem der Ansprüche 9 bis 11,
**dadurch gekennzeichnet,**
**dass** die Fensterscheibe (7) in der oberen Schließstellung vorgespannt an dem Randdichtungselement (8a) des ersten Führungsprofils (2) anliegt, so dass das Randdichtungselement (8b) des zweiten Führungsprofils (3) an die Fensterscheibe (7) herangezogen wird.
